# EUROPEAN PATENT APPLICATION

(11) **EP 2 848 842 A1**
(43) Date of publication of application: **18.03.2015**
(21) Application number: 14180850.1
(22) Date of filing: 13.08.2014
(51) Int. Cl.: F16H 57/04

(54) **Lubrication system**

(30) Priority: 11.09.2013 GB 201316191
(71) Applicant: Caterpillar Shrewsbury Limited, Shrewsbury, Shropshire SY1 3NX (GB)
(72) Inventor: Smith, Christopher, Trewern, Powys SY21 8EA (GB)
(74) Representative: Boult Wade Tennant

(57) **Abstract**

The present disclosure relates to a lubrication system for an engine (100). The lubrication system includes a gear case (104) having a conduit (316) for drainage of an accumulated fluid (402). When the engine (100) is oriented horizontally, fluid such as a lubricant tends to accumulate within the gear case (104). The present disclosure provides an internal wall (314) within the gear case (104) for directing the fluid (402) into a confined space of the conduit (316) defined by the internal wall (104) configured to allow the fluid to be channeled and drained out of the gear case (104) in use.

## Description

### Technical Field

The present disclosure relates to a lubrication system, and more specifically to a gear case design of the lubrication system.

### Background

Usually a fluid, such as a lubricant, is required to be supplied to various components of an engine for lubrication and/or cooling purposes. The fluid is supplied to the components such as a cylinder head, an engine block and so on from a fluid sump by forced lubrication using one or more pumps of a lubrication system of the engine. In a vertically oriented engine, the fluid supplied to the components usually returns to the fluid sump due to gravity. Some applications may require an engine to be oriented on its side to make better use of the available space. Such engines are hereinafter referred to as a "horizontal engine"

However, in the horizontal engine, the fluid supplied to the components may tend to accumulate in some areas of the components. This fluid may continue to remain collected within the components due to the horizontal orientation of the engine. The accumulated fluid may cause deterioration in a performance of the lubrication system by causing a reduction in flow pressure of the fluid. Further, an additional amount of the fluid may be needed to be fed into the lubrication system in order to compensate for a loss of the fluid due to the accumulation.

Hence, there is a need for an improved lubrication system which provides for a better circulation of the fluid that would otherwise accumulate in the horizontal engine.

### Summary of the Disclosure

In one aspect of the present disclosure, a gear case for an engine arranged in a horizontal orientation is provided. The gear case includes a base plate and a side wall extending from the base defining a periphery of the gear case. The gear case also includes an internal wall extending from the base plate. The internal wall defines a conduit in combination with the side wall to provide a path for drainage of a fluid from the gear case.

Other features and aspects of this disclosure will be apparent from the following description and the accompanying drawings.

### Brief Description of the Drawings

Figure 1 is an exemplary engine, according to one embodiment of the present disclosure;
Figure 2 is a perspective view of a valve base of the engine;
Figure 3 is a perspective view of a gear case of the engine; and
Figure 4 is a partial rear view of the gear case showing a flow of a fluid in the gear case.

### Detailed Description

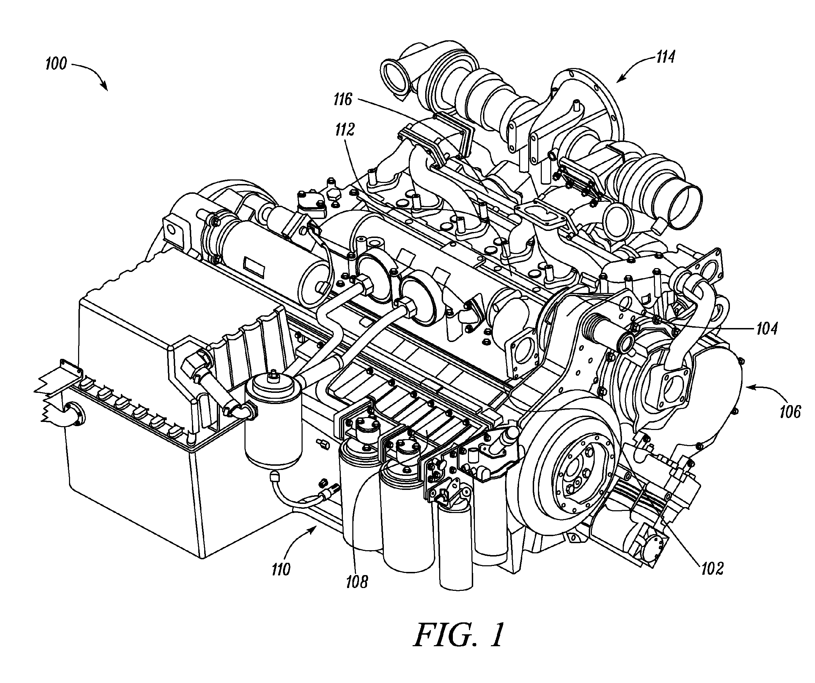

Wherever possible, the same reference numbers will be used throughout the drawings to refer to the same or the like parts. Referring to Figure 1, a perspective view of an exemplary engine 100 is illustrated. The engine 100 may be any internal combustion engine powered by a fuel such as petrol, diesel, natural gas and/or a combination thereof. The engine 100 may be used in a number of stationary applications such as generator sets and/or mobile applications such as locomotives, large machines and so on.

The engine 100 includes an engine block 102. The engine block 102 is positioned in a substantially inclined or horizontal configuration. The engine block 102 may include one or more cylinders (not shown). Each cylinder may be configured to receive a piston of a piston-connecting rod assembly. A gear case 104 is provided on a side portion 106 of the engine block 102. The gear case 104 may be configured to house and/or support various components of a gear train (not shown) including, but not limited to, gears and shafts. The gear case 104 may be affixed to the engine block 102 by any known means such as bolting, riveting, welding and so on.

A fluid sump 108 may be provided at a lower portion 110 of the engine block 102. The fluid sump 108 is provided in fluid communication with the engine block 102. The fluid sump 108 is configured to provide a supply of a fluid such as a lubricant and/or a coolant to the engine block 102. The fluid sump 108 may be formed as an integral portion of the engine block 102. Alternatively, the fluid sump 108 may be a separate component and may be fixedly attached to the engine block 102 by any known means such as bolting, riveting, welding and so on.

A cylinder head 112 is provided on a top portion 114 of the engine block 102. The cylinder head 112 may form a combustion chamber in cooperation with each cylinder provided in the engine block 102. The cylinder head 112 may also provide mounting of one or more inlet valves and exhaust valves associated with each cylinder. Additionally, passages (not shown) may be provided in the cylinder head 112 for introduction of air and/or fuel into the cylinders for combustion process.

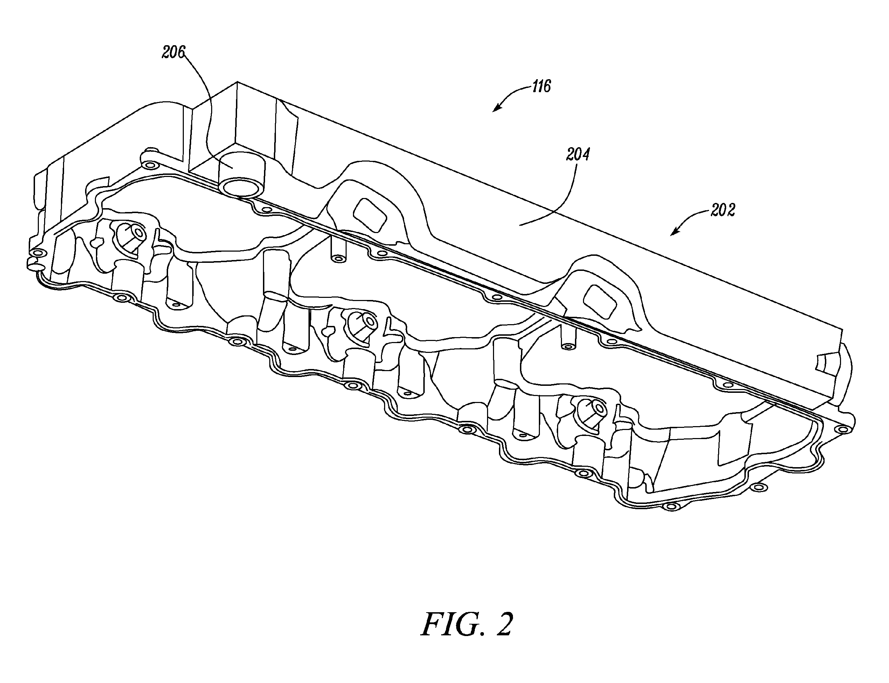

Further, a valve base 116 may be provided in cooperation with the cylinder head 112. Referring to Figure 2, a perspective view of the valve base 116 is illustrated. The valve base 116 has a hollow rectangular configuration. The valve base 116 may be mounted on the cylinder head 112 and affixed thereon by any fastening means known in the art such as bolting, riveting, welding and so on. The valve base 116 may be configured to at least partially house and/or support various components of a valve train (not shown). The components of the valve train may include one or more inlet valves, exhaust valves, rocker arms, pushrods, lifters and camshafts of the engine 100.

During operation of the engine 100, the fluid such as the lubricant may be provided to the valve train by a lubrication system (not shown) of the engine 100. The fluid may provide for lubrication and/or heat dissipation of the components of the valve train. In the horizontal configuration of the engine block 102, the fluid may flow from the cylinder head into the valve base 116 and further through the components of the valve train and may collect at a lower section 202 of the valve base 116.

Accordingly, a drain duct 204 may be provided at the lower section 202 of the valve base 116. The drain duct 204 may be integrally formed as a part of the valve base 116 or may be additionally affixed to the valve base 116 as a separate component. The drain duct 204 may be formed as a substantially elongated, rectangular chamber. The drain duct 204 is configured to receive the fluid from the components of the valve train and/or the cylinder head 112. Further, the drain duct 204 includes a drain outlet 206 provided at one end of the drain duct 204. The drain outlet 206 is configured for attaching of the valve base 116 to the gear case 104. Accordingly, the drain outlet 206 provides fluid communication between the valve base 116 and the gear case 104. The drain duct 204 defines a path within the valve base 116 for flow of the fluid towards the gear case 104.

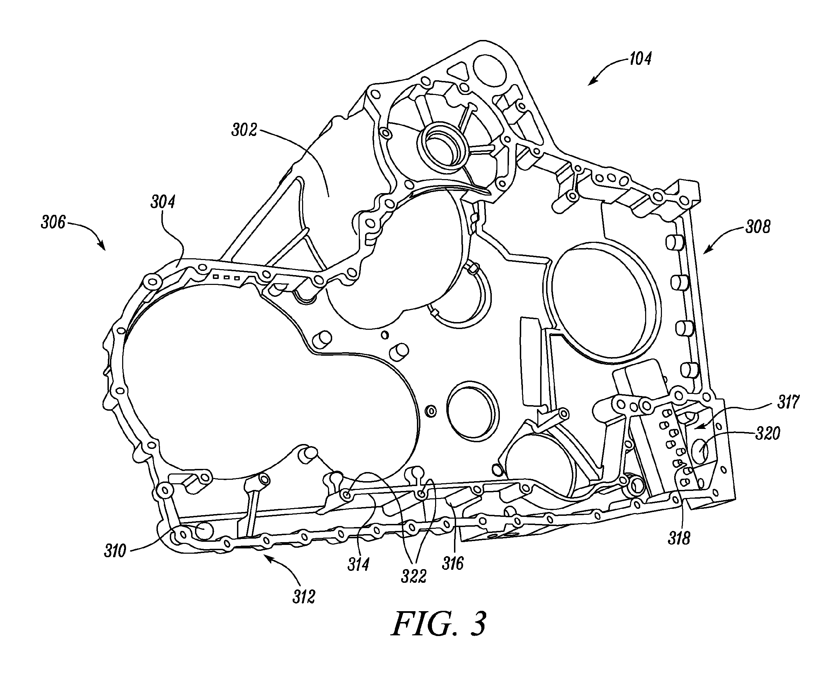

Referring to Figure 3, a perspective view of the gear case 104 is illustrated. The gear case 104 includes a base plate 302. A side wall 304 may be provided on the base plate 302 in a manner such that the side wall 304 forms a periphery of the gear case 104. Further, the side wall 304 may provide for mounting and affixing the gear case 104 to the engine block 102 by any known means such as bolting, riveting, welding and so on. The gear case 104 is mounted on the engine 100 in a manner such that it at least partially encloses the engine block 102 and/or the cylinder head 112.

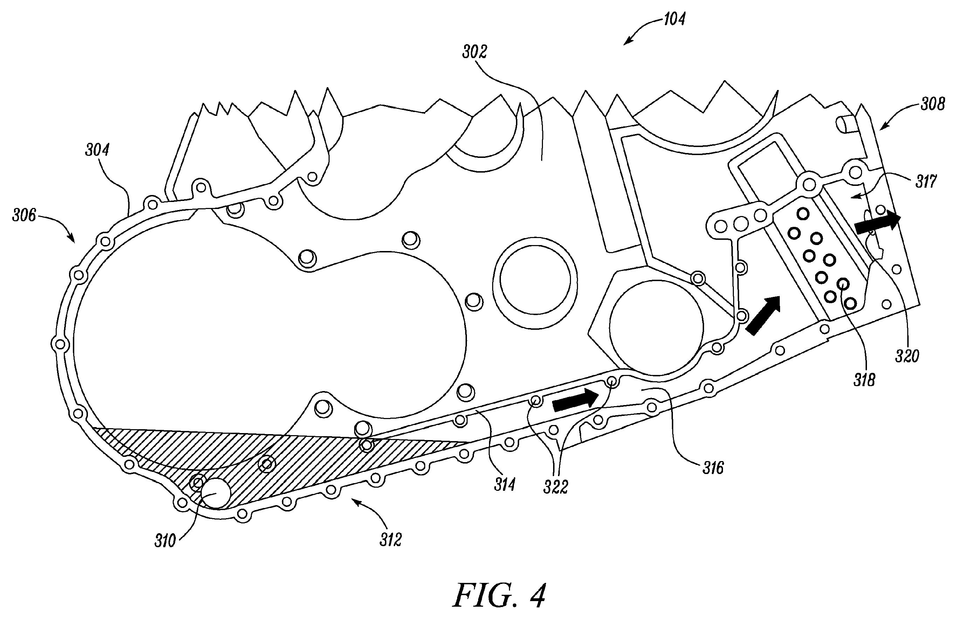

The gear case 104 includes a first section 306 and a second section 308. A fluid inlet 310 is provided in the first section 306 of the base plate 302. More specifically, the fluid inlet 310 is provided in a lower most section 312 of the gear case 104. Alternatively, the fluid inlet 310 may be provided on the side wall 304 of the gear case 104. The location of the fluid inlet 310 may vary as per system design and requirements. The fluid inlet 310 is fluidly coupled to the drain outlet 206 of the drain duct 204. Accordingly, the fluid inlet 310 is configured to provide fluid communication between the gear case 104 and the valve base 116. As shown in Figure 4, during operation of the engine 100, the fluid received in the drain duct 204 may flow through the drain outlet 206 into the fluid inlet 310 of the gear case 104 and accumulate in the lower most section 312 of the gear case 104. This portion of the accumulated fluid 402 is shown Figure 4. Also, the fluid flow direction is shown by arrows in the given figure.

Referring to Figures 3 and 4, the gear case 104 also includes an internal wall 314 extending substantially perpendicularly from the base plate 302. The internal wall 314 extends between the first and second sections 306, 308 of the gear case 104. The internal wall 314 is provided in the lower most section 312 of the gear case 104 in a manner such that the internal wall 314 defines a conduit 316 in combination with the side wall 304. The conduit 316 is provided in fluid communication with the fluid inlet 310. More specifically, the conduit 316 is positioned such that at least a portion of the fluid 402 accumulated within the gear case 104 flows into the conduit 316. The conduit 316 is configured to provide a path for drainage of the fluid from the gear case 104.

Additionally, a straining area 317 is provided within a portion of the conduit 316. The straining area 317 includes a plurality of studs 318 spaced apart from one another and at least partway along a width of the straining area 317. In the illustrated embodiment, the straining area 317 is provided in the second section 308 of the gear case 104 and adjacent to a fluid outlet 320. The plurality of studs 318 may be formed as substantially cylindrical projections extending perpendicularly from the base plate 302. The location, number, shape and size of the plurality of studs 318 may vary according to system design and requirements. The plurality of studs 318 may be configured to strain the fluid flowing in the conduit 316 towards the fluid outlet 320. In other words, the plurality of studs 318 may serve as a coarse filter to strain any unwanted debris present in the fluid.

The fluid outlet 320 is provided in the gear case 104 in fluid communication with the conduit 316. The fluid outlet 320 is provided in the second section 308 of the gear case 104. The fluid outlet 320 is coupled to the fluid sump 108 and provides fluid communication between the gear case 104 and the fluid sump 108. The fluid outlet 320 is configured to provide drainage of the fluid present in the conduit 316 from the gear case 104 into the fluid sump 108. Further, the gear case 104 includes a plurality of abutment portions 322 provided at least partway along a length of the internal wall 314. The plurality of abutment portions 322 are configured for attaching the gear case 104 to the engine block 102. More specifically, the plurality of abutment portions 322 may receive fasteners such as bolts and screws for attaching the gear case 104 to the engine block 102.

In one embodiment, a pumping means (not shown) may be provided in fluid communication with the gear case 104 and the fluid sump 108. The pumping means may be any pump known in the art including, but not limited to, a piston pump, a gear pump, and a screw pump. The pumping means may be configured to scavenge the fluid from the gear case 104. Referring to Figure 4, the pump may create suction in the conduit 316 and scavenge the fluid present in the lower most section 312 of the gear case 104 into the conduit 316 and further through the fluid outlet 320 into the fluid sump 108.

### Industrial Applicability

The working of the present disclosure will now be described in detail. The lubrication system of the engine 100 may provide the fluid from the fluid sump 108 to the cylinder head 112 and the components of the valve train. In the horizontal configuration of the engine 100, the fluid may flow through the cylinder head 112 and the components of the valve train and further into the drain duct 204. The fluid may accumulate in the drain duct 204 and flow into the gear case 104 through the drain outlet 206 and the fluid inlet 310 respectively. Accordingly, as shown in Figure 4, the portion of the fluid 402 may accumulate in the lower most section 312 of the gear case 104.

Further, the pumping means may create suction in the conduit 316 and force the fluid from the lower most section 312 of the gear case 104 into the conduit 316. The fluid may continue to flow through the conduit 316 towards the fluid outlet 320 (shown by arrows in Figure 4). The plurality of studs 318 provided in the straining area 317 may strain the fluid of any unwanted debris before the fluid exits the conduit 316 through the fluid outlet 320. After exiting the gear case 104, the fluid may flow through the pumping means and further into the fluid sump 108.

While aspects of the present disclosure have been particularly shown and described with reference to the embodiments above, it will be understood by those skilled in the art that various additional embodiments may be contemplated by the modification of the disclosed machines, systems and methods without departing from the spirit and scope of what is disclosed. Such embodiments should be understood to fall within the scope of the present disclosure as determined based upon the claims and any equivalents thereof.

## Claims

1. A gear case for an engine arranged in a horizontal orientation, the gear case comprising:
a base plate;
a side wall extending from the base plate, the side wall defining a periphery of the gear case; and
an internal wall extending from the base plate, the internal wall in combination with the side wall defining a conduit configured to provide a path for drainage of a fluid from the gear case.

2. The gear case of claim 1 further comprising a fluid inlet in fluid communication with the conduit.

3. The gear case of claim 2 further comprising a fluid outlet in fluid communication with the conduit.

4. The gear case of claim 3, wherein the fluid outlet is positioned at an end opposed to that of the fluid inlet.

5. The gear case of claim 3, wherein a straining area is defined within a portion of the conduit.

6. The gear case of claim 5, wherein the straining area is proximate to the fluid outlet.

7. The gear case of claim 5, wherein the straining area includes a plurality of studs arranged spaced apart from one another and at least partway along a width of the straining area, the plurality of studs configured to trap debris therebetween.

8. The gear case of claim 1 further comprising a plurality of abutment portions provided at least partway along a length of the internal wall configured for attachment to the engine.

9. The gear case of claim 1, wherein the conduit is positioned on a lower most section of the gear case for enabling the fluid within the gear case in use to drain into the conduit.

10. The gear case of claim 1, wherein the gear case is attached to a valve base for receiving the fluid therefrom.

11. The gear case of claim 8, wherein the valve base further includes a drain duct in fluid communication with the conduit.

12. The gear case of claim 1, wherein the gear case is attached to a fluid sump having an interior arranged for fluid communication with the conduit.

13. The gear case of claim 1, wherein the gear case is fluidly connected to a pumping means configured to pump the fluid from the conduit.

14. The gear case of claim 1, wherein the internal wall is made of any one of a metal and a polymer.

15. The gear case of claim 1, wherein the gear case is attached to the engine.
